# EUROPEAN PATENT APPLICATION

(11) **EP 1 852 254 A1**
(43) Date of publication of application: **07.11.2007**
(21) Application number: 06714437.8
(22) Date of filing: 23.02.2006
(51) Int. Cl.: B32B 27/32, B29C 45/14

(54) **MULTILAYER SHEET FOR THERMAL FORMING, FORMED BODY, INJECTION MOLDED BODY AND METHOD FOR PRODUCING SAME**

(30) Priority: 23.02.2005 JP 2005046999
(71) Applicant: DAINIPPON INK AND CHEMICALS, INC., Itabashi-ku, Tokyo 174-8520 (JP)
(72) Inventor: SAWADA, Hidetsugu c/o Dainippon Ink & Chemicals, Inc., Chiba, 2858668 (JP); OHYA, Satoshi c/o Dainippon Ink and Chemicals, Inc., Chiba, 2858668 (JP); YUGE, Toshio c/o Dainippon Ink and Chemicals, Inc., Chiba, 2858668 (JP); ARAI, Kousuke c/o Dainippon Ink and Chemicals, Inc, Chiba, 2858668 (JP)
(74) Representative: Albrecht, Thomas
(86) International application number: PCT/JP2006/303297
(87) International publication number: WO 2006/090786

(57) **Abstract**

The object of the present invention is to provide a laminated sheet for thermoforming, including a thermoplastic resin film layer; a decoration layer; and a support base resin layer, wherein the thermoplastic resin film layer, the decoration layer, and the support base resin layer are sequentially laminated, and the support base resin layer contains one or more linear low density polyethylene layers. Also, the object of the resent invention is to provide a formed product obtained by thermoforming the laminated sheet, and a method of producing the same. Furthermore, the object of the present invention is to provide an injection-molded product obtained by loading an injection resin onto the backside of the molded product, and a method of producing the same.

## Description

### Technical Field

The present invention relates to a laminated sheet for thermoforming having a decoration layer, that is capable of being thermoformed to have a desired shape, and that can be used as a laminated sheet for in-mold injection-molding enabling the in-mold decoration which is useful to decorate a surface of the injection-molded product. Furthermore, the present invention relates to a formed product obtained by thermoforming the laminated sheet for thermoforming, and an injection-molded product obtained by performing in-mold injection-molding with respect to the laminated sheet for thermoforming or the formed product.

### Background Art

Methods of decorating resin formed products such as injection-molded products, for example, include a method of injection-molding a resin which is colored by way of mixing pigments into the resin; and a method of performing spray coating or the like with respect to a surface layer of the formed product after conducting a forming process. Particularly, when decorations of metal-finish designs are required, such decorations are often provided by using a coating or plating method after conducting a forming process. This is because it is difficult to uniformly disperse the metal pigment in the resin, among others.

However, in order to secure the working environment and the outside environment against the discharge of chemical substances, in recent years, an alternative method has been sought instead of the coating or plating method. Accordingly, the use of an aqueous paint, powder paint or the like has been considered to provide decorations of metal-finish designs, but such methods still have problems.

Meanwhile, a method in which a laminated sheet for thermoforming that has a metallic decoration layer, that is capable of being thermoformed to have a desired shape, and that enables the in-mold decoration useful for decorating the surface of the in-mold decoration product is molded to be integrated when the injection-molding is performed has been known. Specifically, the formed product obtained by way of thermoforming the laminated sheet for thermoforming is inserted into a mold for injection-molding, the in-mold injection-molding is conducted, and an injection-molded product that is used as materials for a vehicle, home electronics, construction or the like can be obtained.

According to the method, decorations of metal-finish designs may be provided to the resin formed product such as the injection-molded product without using a solvent.

Examples of such laminated sheets for thermoforming having the metallic decoration layer include a laminated sheet in which a film that contains an aluminized polyethyleneterephthalate (hereinafter, referred to as "PET") as a main component; and a film containing polypropylene (hereinafter, referred to as "PP") or the like as a main component are layered by way of the dry laminating method. In addition, a laminated sheet including a decoration layer of an ink layer wherein metal thin film flakes are dispersed in a binding resin varnish; and a protection layer of a thermoplastic resin layer or the like has been known (for example, see Patent Documents 1 and 2).

However, an acryl resin (for example, a polymethyl methacrylate, referred to as "PMMA" hereinafter) that is used as the protection layer for the decoration layer; a polyester resin (for example, PET); a cyclic polyolefin resin; and the like are fragile at low temperatures, and are inferior in terms of impact resistance while they have excellent transparency. Therefore, there has been a problem that the obtained formed products or injection-molded products are also inferior in terms of low-temperature impact resistance.

With regard to a formed product obtained by using a laminated sheet for thermoforming in which the thermoplastic resin film layer of PMMA, PET, cyclic polyolefin or the like; the decoration layer; and the support base resin layer are sequentially layered, the thermoplastic resin film layer is likely to have cracks in a low temperature impact test since the thermoplastic resin film layer is the outmost layer. The reason for causing such cracks is believed that the used thermoplastic resin is weak at low temperatures. It may be possible to prevent the cracks from expanding in the formed product or the in-mold decoration product by way of providing a support base resin layer of a resin such as a PP resin having excellent impact resistance to the laminated sheet for thermoforming, or by way of using PP as a main component of the injection resin.

However, even though PP is used by way of the above-mentioned method, the strength is not sufficient in the impact test which is performed at the ultra-low temperature of -5°C or less. The lack of the strength accidentally causes cracks in the entire body of the injection-molded product, and the injection-molded product may be destroyed. Accordingly, a laminated sheet for thermoforming or a laminated sheet for in-mold injection-molding that has high impact resistance at such an ultra-low-temperature has been particularly sought.

Meanwhile, it is known that a linear low density polyethylene is used in a laminated film which requires high mechanical strength, (see, for example, Patent Document 3).
[Patent Document 1] JP-A-2002-46230
[Patent Document 2] JP-A-2004-284019
[Patent Document 3] JP-A1-2001-34383

### Disclosure of the Invention

An object of the present invention is to provide a laminated sheet for thermoforming which can produce a formed product having high impact resistance in a low temperature impact test at -5°C or less.

Another object of the present invention is to provide a formed product and an injection-molded product which are obtained by using the above-described laminated sheet for thermoforming, and a method of producing the formed product and the injection-molded product.

The present inventors discovered that a laminated sheet for thermoforming capable of producing a formed product having high impact resistance at the low temperature of - 5°C or less can be obtained when a linear low density polyethylene layer is provided in a support base resin layer of the laminated sheet for thermoforming. This resulted in the present invention.

That is, an aspect of the present invention is to provide a laminated sheet for thermoforming, including a thermoplastic resin film layer; a decoration layer; and a support base resin layer that are sequentially laminated, wherein the support base resin layer includes one or more linear low density polyethylene layers.

Furthermore, yet another aspect of the present invention is to provide a formed product that is obtained by thermoforming the above-described laminated sheet for thermoforming.

Furthermore, yet another aspect of the present invention is to provide an injection-molded product which is obtained by loading an injection resin onto the support base resin layer-side of the laminated sheet for thermoforming, or onto the support base resin layer-side of a molded product produced by thermoforming the laminated sheet for thermoforming using vacuum forming, vacuum & pressure forming, pressure forming with a hot plate, or press forming.

Furthermore, yet another aspect of the present invention is to provide a method of producing a formed product, including thermoforming the laminated sheet for thermoforming using vacuum forming, vacuum & pressure forming, pressure forming with a hot plate, or press forming.

Furthermore, yet another aspect of the present invention is to provide a method of producing an injection-molded product, including inserting the laminated sheet for thermoforming into injection molds, such that a thermoplastic resin film layer faces or comes into contact with a female mold of the injection molds, or inserting into a female mold of the injection molds a formed product produced by thermoforming the laminated sheet for thermoforming using vacuum forming, vacuum & pressure forming, pressure forming with a hot plate or press forming, such that a thermoplastic resin film layer comes into contact with the female mold of the injection molds; clamping the molds; and loading the injection resin form the backside of the molded product.

The laminated sheet for thermoforming according to the present invention has excellent thermoforming properties. The formed product that is produced by using the laminated sheet for thermoforming according to the present invention has high impact resistance even at the low temperature of -5°C or less. The injection-molded product that is produced by conducting in-mold injection-molding with respect to the obtained formed product also has high impact resistance at the ultra-low temperatures.

### Brief Description of the Drawings

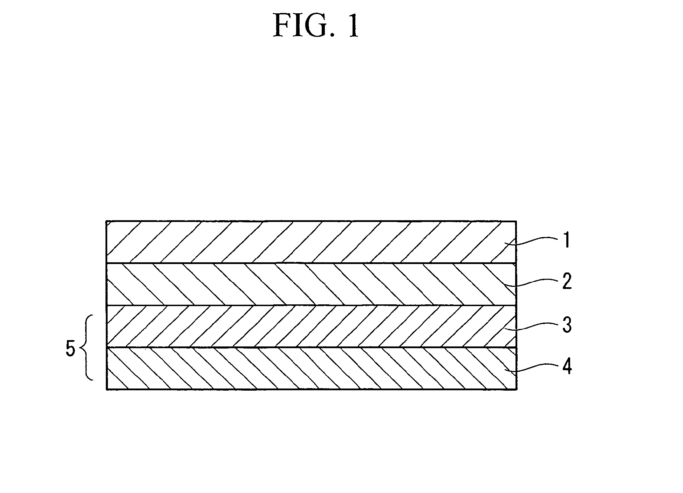

FIG. 1 is a view illustrating an example of the laminated sheet for thermoforming according to the present invention.

### Reference Numerals :

- 1: THERMOPLASTIC RESIN FILM LAYER
- 2: DECORATION LAYER
- 3: LINEAR LOW DENSITY POLYETHYLENE LAYER
- 4: POLYPROPYLENE LAYER
- 5: SUPPORT BASE RESIN LAYER

### Best Mode for Carrying Out the Invention

Hereinafter, the laminated sheet for thermoforming of the present invention will be described in detail.

An example of the laminated sheet for thermoforming according to the present invention is shown in FIG. 1. In FIG. 1, reference numerals 1, 2, 3, 4, and 5 denote a thermoplastic resin film layer, a decoration layer, a linear low density polyethylene layer, a PP layer, and a support base resin layer, respectively. Hereinafter, each layer will be described. In addition, the term "(metha)acrylic acid" denotes any one or both of a methacrylic acid and an acrylic acid in the present description.

### (Thermoplastic resin film layer 1)

The thermoplastic resin film layer 1 used in the present invention is a single layer or a multilayered film having extensibility with respect to heating. It is preferable that the film have transparency within a range where sharpness of a decoration layer 2 is not reduced. The haze (haze value) of the film is preferably less than 5%. The haze (haze value) is measured according to JIS K-7105.

Since the laminated sheet of the present invention is subjected to thermoforming such as vacuum forming, the softening temperature of the thermoplastic resin film layer 1 is preferably within a range of 50 to 300°C, and more preferably within a range of 50 to 250°C.

It is preferable that the resin included in the thermoplastic resin film layer 1 be at least one resin selected from the group consisting of an acryl resin, a fluorine resin, a polyester resin, a polycarbonate resin, and a cyclic polyolefin resin.

Examples of the acryl resin may include a poly(meth)acrylic acid ester such as a polymethylethacrylate, polyethylmethacrylate, polypropylmethacrylate, or polybutyl methacrylate.

Examples of the fluorine resin may include a polytetrafluoroethylene, a tetrafluoroethylene-ethylene copolymer, a tetrafluoroethylene-perfluoroalkylvinylether copolymer, a polychlorotrifluoroethylene, or a polyvinylidene difluoride.

Examples of the polyester resin may include PET and polybutylene terephthalate.

Examples of the polycarbonate resin may include bisphenol A polycarbonate or tetramethylbisphenol A polycarbonate.

Examples of the cyclic polyolefin resin may include a polycycloolefin resin, a polycyclohexadiene resin, or a copolymer of ethylene and cycloolefins such as norbornene, tetracyclododecene, or tricyclodecane.

Examples of other resin components may include polyethylene, PP, polystyrene, an acrylnitrile-styrene resin, a transparent acrylnitrile-butadiene-styrene resin, a methyl methacrylate-styrene resin, a transparent methyl methacrylate-butadiene-styrene resin, a polyamide resin such as nylon, an ethylene-vinyl acetate resin, an ethylene-acrylic acid resin, an ethylene-ethyl acrylate resin, an ethylene-vinyl alcohol resin, a chloride resin such as polyvinylchloride and polyvinylidene chloride, a modified polyphenylene ether resin, an ionomer resin, a methylpentene resin, a cellulose resin, or the like. These resins may be used alone or in combination with the above-mentioned resins.

Within a range where transparency of the film is not reduced, the above-mentioned resins may be mixed in combination of two or more types, or may be used to form a multilayered structure.

In particular, when the polyester resin, the acryl resin, or the cycloolefin resin is applied to the thermoplastic resin film layer 1, cracks may be easily formed in the thermoplastic resin film layer 1 in an impact test at a low temperature of -5°C or less. Therefore, the support base resin layer 5 has one or more linear low density polyethylene layers 3, and this can effectively prevent such cracks from developing throughout the entire body of the laminated sheet for thermoforming.

In order to improve the low temperature impact properties at -5°C or less, the above-mentioned resins that constitute the thermoplastic resin film layer 1 may be formed into modified rubbers within a range where the transparency is not reduced. The method of forming the modified rubber is not particularly limited, but examples of the method may include a method of copolymerizing rubber monomers such as butadiene by adding them during the polymerization of the resins, and a method of blending a synthetic rubber or a thermoplastic elastomer with the resins while they are melted by way of heating.

Moreover, the thermoplastic resin film layer 1 may contain various types of additives generally used for films, such as an antioxidant, an ultraviolet absorbing agent, and a lubricant, as long as the transparency is not reduced. Furthermore, the thermoplastic resin film layer may contain a coloring agent such as a pigment or a dye, such that the transparency is reduced in order to create a sophisticated design. In this case, the amount of the coloring agent depends on the type of the coloring agent, the required color tone, and the thickness of the film, but the haze (haze value) of the thermoplastic resin film is preferably less than 20% so as to prevent the decoration layer 2 from being concealed. In terms of weatherability, it is preferable that the coloring agent be a pigment.

The method of producing the thermoplastic resin film layer 1 is not particularly limited, and the film may be produced by way of common methods. Furthermore, stretching treatment may be performed uniaxially or biaxially within a range where its extensibility during the thermoforming is not reduced.

The thickness of the film is not particularly limited. However, the thickness is preferably within a range of 0.01 to 1.00 mm, and more preferably within a ragen of 0.03 to 0.30 mm since the thermoforming properties and sharpness of the decoration layer 2 becomes excellent.

In order to impart properties such as a decoration property, abrasion resistance, scratch resistance, weatherability, fouling resistance, water resistance, chemical resistance, and heat resistance, one or more transparent, semitransparent, or colored clear top coat layers may be provided onto the side of the thermoplastic resin film layer 1 opposite to the decoration layer 2. Preferable examples of a top coating agent include a lacquer type, a crosslinking type using an isocyanate or epoxy, a UV (ultraviolet) crosslinking type, or an EB (electronic beam) crosslinking type as long as the agent does not reduce expansibility of the laminated sheet for thermoforming.

In addition, the top coat layer may be formed by way of coating using a spray method or the like after the laminated sheet for thermoforming according to the present invention is subjected to thermoforming or after the obtained formed product is subjected to in-mold injection-molding.

### (Support base resin layer 5)

The support base resin layer 5 according to the present invention includes one or more linear low density polyethylene layers 3(B), preferably 1 to 3 linear low density polyethylene layers, and more preferably 1 or 2 linear low density polyethylene layers.

The PP layer 4(A) may have sufficient strength and excellent thermoforming properties such as vacuum forming capabilities and pressure forming capabilities even if the stretching treatment is not conducted. Accordingly, it is preferable that a multilayered structure of the PP layer 4 (A) and the linear low density polyethylene layer 3(B) be formed as the support base resin layer 5.

The PP layer 4 (A) is a layer containing a PP resin, and the amount of the PP resin in the resin components of the layer is preferably 40% by mass or less, more preferably 50% by mass or more, and even more preferably 60% by mass or more.

Examples of the PP resin used in the present invention may include a propylene homopolymer, a propylene-ethylene block copolymer, a propylene-ethylene random copolymer, a copolymer of propylene and α-olefins having 3 or more carbon atoms, and a tertiary copolymer of propylene, ethylene, and α-olefins having 3 or more carbon atoms. They may be used alone or in combination of two or more species. In addition, in terms of thermoforming properties, it is preferable that the melting temperature of the PP resin be within a range of 110 to 170°C. Meanwhile, the melting temperature is measured according to JIS K7121.

The PP layer 4(A) contains 40% by mass or more of the above-described PP resin, and may also contain various types of resins that can be melt-mixed typically with the PP resin. Examples of the resin that can be melt-mixed with the PP resin may include a high-density polyethylene, low-density polyethylene, linear low density polyethylene, a styrene-based elastomer such as a styrene-ethylene-butadiene-styrene copolymer and a styrene-ethylene-propylene-styrene copolymer, and an olefin-based elastomer such as ethylenepropylene rubber that is represented by an ethylene-propylene copolymer and an ethylene-propylene-diene copolymer.

Even if a material obtained by melt-blending the PP resin with the linear low density polyethylene is used as the support base resin layer 5, an improvement in the impact resistance is limited at the ultra-low temperature. Therefore, in order to significantly improve the low temperature impact resistance at -5°C or less, it is required that the support base resin layer 5 have one or more linear low density polyethylene layers 3.

It is preferable that the sum total of the thicknesses of the linear low density polyethylene layers 3(B) be 0.01 mm or more since the laminated sheet for thermoforming according to the present invention can have excellent impact resistance. The low temperature impact resistance at -5°C or less is improved as the thickness of the linear low density polyethylene layer 3(B) is increased. Moreover, since a "gate flow mark" is not conspicuous on the support base resin layer 5 when the laminated sheet is subjected to the in-mold injection-molding, it is more preferable that the sum total of the thicknesses of the layers be 0.02 mm or more. In addition, the term "gate flow mark" refers to a stripe pattern that is formed on the surface of the injection-molded product around the gate.

The total thickness of the support base resin layer 5 is preferably in the range of 0.1 to 1.0 mm, and more preferably in the range of 0.1 to 0.5 mm since excellent thermoforming properties can be obtained. The configuration of the PP layer 4 (A) and the linear low density polyethylene layer 3(B) is preferably selected from the group consisting of layer 4(A)/ layer 3(B), layer 4(A)/ layer 3(B)/ layer 4 (A), and layer 3(B)/layer 4(A)/ layer 3(B). Furthermore, it is preferable that a ratio of the total thickness of the linear low density polyethylene layer 3(B) to the total thickness of the sheet be within a range of 1 to 40% because the obtained formed product or the injection-molded product can have excellent curling-resistance.

Furthermore, it is preferable that the outermost layer of the support base resin layer 5 adjacent to the decoration layer 2 be the linear low density polyethylene layer 3 (B) because cracks can be efficiently prevented from expanding across the layer in the low temperature impact test.

The linear low density polyethylene layer 3 used in the present invention is a layer that is formed with a linear low density polyethylene. The linear low density polyethylene layer 3 contains preferably 50 % by mass or more of the linear low density polyethylene, more preferably 70 % by mass or more of linear low density polyethylene, and most preferably 100 % by mass of linear low density polyethylene.

In the linear low density polyethylene used in the present invention, "linear" means a structure which has relatively few side chains (according to comonomers acting as a copolymerization component reacting with the ethylene) branched from the ethylene main chain, and which hardly has long chain branches having 10 or more carbon atoms and a crosslinking structure.

In addition, "low density" means that the concentration of the polyethylene is within a range of 0.900 to 0.940 g/cm³. The concentration is preferably within a range of 0.900 to 0.935 g/cm³, and more preferably 0.905 to 0.930 g/cm³. Furthermore, in order to obtain a linear low density polyethylene having a predetermined density, linear low density polypropylenes having two different densities may be melt-mixed. Meanwhile, the density is measured according to JIS K6760.

As an example of preferable linear low density polyethylenes, a copolymer of ethylene and one or more comonomers selected from α-olefins having 4 to 10 carbon atoms, such as butene-1, hexene-1, octene-1, and 4-methylpentene-1.

In addition, the melting temperature of the linear low density polyethylene is preferably in a range of 110 to 130°C, and more preferably 115 to 125°C. Moreover, when the support base resin layer 5 is a laminated layer of the PP resin and the linear low density polyethylene, the difference between their melting temperatures is preferably in a range of 30°C or less, more preferably 20°C or less, and even more preferably 10°C or less, in terms of forming properties.

The polymerizing method of the linear low density polyethylene is not particularly limited. The examples include the bulk polymerization method, the solution polymerization method, the slurry polymerization method, and the gas-phase polymerization method using a Ziegler-Natta catalyst, a metallocene catalyst or the like. However, various types of polymerization methods using the metallocene catalyst are preferable because such methods can produce a polymer having excellent copolymerization properties and a homogeneous structure.

The linear low density polyethylene layer 3(B) contains 50% by mass or more of the linear low density polyethylene, and may also contain various types of resins that can be melt-mixed with the linear low density polyethylene. Examples of the resin that can be melt-mixed with the linear low density polyethylene may include the above-mentioned PP resin, a high-density polyethylene, a low-density polyethylene, a styrene-based elastomer such as a styrene-ethylene-butadiene-styrene copolymer and a styrene-ethylene-propylene-styrene copolymer, and an olefin-based elastomer such as an ethylenepropylene rubber that is represented by an ethylene-propylene copolymer and an ethylene-propylene-diene copolymer.

Examples of the method of laminating the support base resin layer 5 include a co-extrusion molding method using thermofusion because the production cost is low, the production is also efficient, and sheets having uniform thickness can be obtained. The extrusion conditions of the sheet that is used in the co-extrusion molding method to produce the support base resin layer 5 are not particularly limited as long as a multilayered sheet can be formed. However, the resin is molten and mixed in an extruder, for example, at the resin temperature of 180 to 250°C in the case of the PP resin, or at the temperature of 170 to 220°C in the case of the linear low density polyethylene. The resin molten in each extruder is layered in a feed block that is a resin-converging device, and the processes of the melting and the extrusion molding are conducted by way of using T die. The molten and extruded sheet is molded to form a sheet having a predetermined thickness distribution by way of controlling the lip gap of the T die, and then cooled if necessary. When the obtained sheet is thick, a touch roll and an air knife are used in order to obtain a uniform sheet. On the other hand, when the sheet is thin, methods such as the electrostatic pinning are used to obtain a uniform sheet. Meanwhile, "T die" refers to a flat mouth piece used to extrude a flat sheet or film.

The laminated sheet for thermoforming according to the present invention is thermoformed to form a three-dimensional-geometric formed-product. However, when the mold shrinkage factor of the resin used in the support base resin layer 5 differs from that of the thermoplastic resin used in the thermoplastic resin film layer 1 on which the decoration layer 2 is layered, the formed product will be strangely shaped, and cannot attain a desirable shape. Therefore, it is preferable that an inorganic filler be added to the resin of the support base resin layer 5 in order to solve the above problem.

The inorganic filler is not particularly limited, but the examples include talc, calcium carbonate, a clay, diatomite, mica, magnesium silicate, silica, or the like. Furthermore, if the particle diameter of the inorganic filler is large, the surface of the support base resin layer 5 becomes irregular. The irregularity will influence the decoration layer 2 layered thereon, and will cause damage to the design of the laminated sheet for thermoforming according to the present invention. Therefore, it is preferable that the particle diameter be small.

Since the support base resin layer 5 of the laminated sheet for thermoforming according to the present invention has a multilayered structure, the particle diameter of the inorganic filler contained in the layers located in its central portion is not particularly limited. However, when the inorganic filler is added to the layer that is adjacent to the decoration layer 2, the average particle diameter is preferably 4 µm or less, and more preferably 2 µm or less. In addition, even if the particle diameter becomes much smaller, this does not cause any problems. Therefore, it is unnecessary to set a lower limit of the particle diameter.

It is required that a sufficient amount of the inorganic filler be added to the support base resin layer 5, such that the mold shrinkage factor of the support base resin layer 5 becomes close to that of the thermoplastic resin used in the thermoplastic resin film layer 1 according to the present invention. Meanwhile, in order to obtain sufficient impact strength of the molded product, the addition amount of the inorganic filler is preferably within a range of 5 to 60% by mass, with respect to the resins included in the support base resin layer 5, and preferably 5 to 40% by mass, and more preferably 10 to 30% by mass in order to obtain excellent vacuum molding properties.

The mold shrinkage factor of the support base resin layer 5 is not particularly limited as long as the laminated sheet for thermoforming of the present invention is not deformed. However, the difference between the molding shrinkage factors of the support base resin layer 5 and the thermoplastic resin film layer 1 is preferably 0.7% or less, and more preferably 0.4% or less.

It is preferable that the support base resin layer 5 contain a coloring agent because the inclusion of the coloring agent can attain excellent concealment of the base color of the molded product. The used coloring agent is not particularly limited. However, for example, typical inorganic pigments, organic pigments, dyes or the like that are traditionally used for coloring general thermoplastic resins are selected according to a type of the required design. Examples thereof may include an inorganic pigment such as titanium oxide, titanium yellow, iron oxide, a complex oxide-based pigment, ultramarine, cobalt blue; chromium oxide, bismuth vanadate, carbon black, zinc oxide, calcium carbonate, barium sulfate, silica, and talc; an organic pigment such as an azo-based pigment, a phthalocyanine-based pigment, a quinacridone -based pigment, a dioxadine-based pigment, an anthraquinone-based pigment, an isoindolinone-based pigment, an isoindoline-based pigment, a perylene-based pigment, a perinone-based pigment, a quinophthalone-based pigment, a thioindigo-based pigment, and a diketopyrrolopyrrole-based pigment; and a metal complex pigment. Furthermore, if a dye is used, it is preferable that one or two species selected from the group consisting of oil-soluble dyes be used.

The amount of the coloring agent included in the support base resin layer 5 varies depending on the type of coloring agent, the required thickness of the sheet, or the color tone. However, in order to attain the required color or sufficient concealment of the base color, and in order to maintain impact strength, the amount is preferably in a range of 0.1 to 20% by mass, and more preferably 0.5 to 15% by mass with respect to the resins included in the colored layer. In the above-mentioned ranges, the required color and sufficient concealment of the base color can be achieved, and excellent impact strength can be also maintained. In addition, within the range where the impact strength and the molding properties are not reduced, additives such as a plasticizer, an antioxidant, an ultraviolet absorbing agent, an antistatic additive, a flame retardant and a lubricant may be mixed, and the additives may be used alone or in combination of two or more types.

### (Decoration layer 2)

The decoration layer 2 is not particularly limited. The decoration layer 2 may be formed by spreading an ink or paint on the thermoplastic resin film layer 1 using a typical method, or may be formed as a metal thin film using the vacuum evaporation method, the sputtering method, the plating method or the like.

Examples of the method of spreading the ink or the paint on the thermoplastic resin film layer 1 may include printing methods such as gravure printing, flexo printing, and screen printing; and coating systems such as a gravure coater, gravure reverse coater, flexo coater, blanket coater, roll coater, knife coater, air knife coater, kiss touch coater, kiss touch reverse coater, comma coater, comma reverse coater, and microgravure coater.

When the metal thin film is formed, the method of spreading the ink or the paint onto the thermoplastic resin film layer 1 or the method of spreading onto the support base resin layer 5 may be used. However, the method of spreading onto the thermoplastic film layer 1 is more preferable in terms of attaining a superior design. Components included in the metal thin film are not particularly limited. However, aluminum, gold, silver, copper, titanium, chromium, nickel, indium, molybdenum, tungsten, palladium, iridium, silicon, tantalum, nickel chromium, chromium copper, aluminum silicon, brass, stainless steel, or the like can be mentioned as examples thereof.

The thickness of the decoration layer 2 is not particularly limited. When the ink or the paint is used, the thickness is preferably in a range of 0.1 to 5 µm, and more preferably 0.5 to 3 µm because the ranges can achieve excellent concealment and superior decoration, and can further prevent irregular coloring during the thermoforming. Furthermore, when the metal thin film layer is formed, the thickness is preferably in a range of 0.01 to 0.50 µm, and more preferably 0.02 to 0.10 µm. In addition, in order to control the adhesion of the thermoplastic resin film layer 1 to the decoration layer 2, the thermoplastic resin film layer 1 may be subjected to surface treatment such as the corona treatment or the primer coating.

In the laminated sheet for thermoforming according to the present invention, one or more decoration protection layers may be provided between the thermoplastic resin film layer 1 and the decoration layer 2 in order to improve the adhesiveness, or the solvent resistance in the case of spreading the decoration layer 2, the heat resistance, the weatherability, the decoration properties or the like. The type of resin used in the decoration protection layer is not limited as long as the transparency and the extensibility during the thermoforming are not reduced. However, in terms of adhesiveness to the transparent thermoplastic resin film, the use of an acryl-based crosslinked resin is preferable. The type of its crosslinking system is not particularly limited. In the case of the acryl-based resin, UV curing, EB curing, hydroxyl group-containing copolymer/isocyanate curing, silanol/water curing, epoxy/amine curing, and the like may be used. However, it is preferable to use the hydroxyl group-containing copolymer/isocyanate curing in terms of its ease of controlling the crosslink density, excellent weatherability, desirable reaction rate, no generation of reaction byproducts, low production cost, among others.

It is preferable that the haze (haze value) of the laminate of the thermoplastic resin film layer 1 and the decoration protection layer be less than 5%. However, in terms of creating a design, a coloring agent such as a pigment and a dye may be added to the decoration protection layer to intentionally reduce the transparency. In this case, the amount of the coloring agent added thereto varies depending on the type of the coloring agent, the intended color tone, and the thickness of the protection layer. However, it is preferable that the haze (haze value as the laminate) of the thermoplastic resin film layer 1 and the decoration protection layer be less than 20%, such that the decoration layer 2 is not concealed.

It is preferable that the coloring agent be a pigment in terms of superior weatherability. The applicable pigments are not particularly limited, but the typical examples include generally known pigments such as coloring pigments, metallic pigments, interference-color pigments, fluorescence pigments, extender pigments and rust-preventive pigments.

Examples of the coloring pigment may include an organic pigment (quinacridones such as quinacridone red, azo dyes such as pigment red, and phthalocyanines such as phthalocyanine blue, phthalocyanine green, and perylene red); an inorganic pigment such as titanium oxide or carbon black. Examples of the metallic pigment may include aluminum powder, nickel powder, copper powder, brass powder, chromium powder, and the like.

Examples of the interference-color pigment may include pearl mica powder or colored pearl mica powder (pearlescent pigment), or the like. Examples of the fluorescence pigment may include organic pigments such as quinacridones, anthraquinones, perylenes, perinones, diketopyrrolopyrroles, isoindolinones, condensed azo pigments, benzimidazolones, monoazo pigments, insoluble azo pigments, naphthols, flavanthrones, anthrapyrimidines, quinophthalones, pyranethrones, pyrazolones, thioindigo pigments, anthanthrones, dioxadines, phthalocyanines, and indanthrones; metal complexes such as nickeldioxin yellow or copper azomethine yellow; metal oxides such as titanium oxide, iron oxide, or zinc oxide; metal salts such as barium sulfate or calcium carbonate; and inorganic pigments such as carbon black, aluminum, or mica.

### (High brilliant ink)

A high brilliant ink layer that formed with an ink having a specular luster of a metal, which is prepared by dispersing metal thin film flakes in a binding resin, (hereinafter, referred to as "high brilliant ink") may be used as the decoration layer 2 of the present invention. The content of the metal flakes is preferably in a range of 3 to 60% by mass with respect to nonvolatile components of the ink. When the high brilliant ink using metal flakes is applied to an object by way of printing or coating, the metal flakes are aligned parallel to the surface of the object. Consequently, this ink can achieve a high metallic sheen of a specular finished metal which can not be achieved by a conventional metallic ink using metal powder. In addition, a metal may be deposited by using the direct deposition method instead of coating the high brilliant ink.

Examples of the metal of the metal thin film flakes used in the high brilliant ink of the high brilliant ink layer may include aluminum, gold, silver, copper, titanium, chromium, nickel, indium, molybdenum, tungsten, palladium, iridium, silicon, tantalum, nickel chromium, chromium copper, aluminum silicon, brass, stainless steel, or the like. As examples of the method of forming the metal into a thin film, the deposition method suitable for metals having a low melting point, such as aluminum; foliation suitable for metals having malleability such as aluminum, gold, silver or copper; and the sputtering method suitable for metals having a high melting point and no malleability can be mentioned. In particular, it is preferable that the metal flakes obtained from the deposited metal thin film be used. The thickness of the metal thin film is preferably in a range of 0.01 to 0.10 µm, and more preferably 0.02 to 0.08 µm. The surface direction size of the metal flakes dispersed in the ink is preferably in a range of 5 to 25 µm, and more preferably 10 to 15 µm. When the size is in the above ranges, the metal flakes are easily aligned, and it is possible to obtain the sufficient glow. Furthermore, when the ink is used by way of printing or coating in the gravure printing or the screen printing, the ink does not cause clogging in printing plate.

Hereinafter, the desirable deposition method will be described particularly as a preferable example of the method of producing the metal thin film flakes. A polyolefin film, a polyester film or the like may be used as a support film on which the metal is to be deposited. After a peeling layer is provided on the support film by way of coating, a metal is deposited on the peeling layer so as to form a predetermined thickness. A top coat layer is applied on the surface of the deposited film in order to prevent oxidation. The coating agents used to form the peeling layer and the top coat layer may be identical.

The resins used in the top coat layer or the peeling layer are not particularly limited. Typical examples thereof may include a cellulose derivative, an acryl resin, a vinyl resin, a polyamide, a polyester, an ethylene-vinyl acetate resin (hereinafter, referred to as "EVA resin"), a chlorinated PP, a chlorinated EVA resin, a petroleum-based resin, or the like. In addition, examples of the solvent may include aromatic hydrocarbons such as toluene and xylene; an aliphatic or alicyclic hydrocarbons such as n-hexane or cyclohexane; esters such as ethyl acetate or propyl acetate; alcohols such as methanol, ethanol, or isopropyl alcohol; ketones such as acetone or methyl ethyl ketone; alkylene glycol monoalkyl ethers such as ethylene glycol monoethyl ether or propylene glycol monomethyl ether; or the like.

The metal deposited film is soaked in a solvent that dissolves the peeling layer and the top coat layer, and the metalfilm is peeled off from the support film by way of stirring. Then, it is further stirred to form the metal thin film pieces having the size of about 5 to 25 µm, and they are separated by way of filtration, and dried. The solvent is not particularly limited as long as the solvent is capable of dissolving the resin used in the peeling layer or the top coat layer. The metal thin film produced by way of the sputtering method can be also formed into such a metal flakes through the above-mentioned procedures. When a metal foil is used, it can be crushed into flakes having predetermined size in a solvent by using a stirrer.

It is preferable that the metal thin film flakes be subjected to surface treatment in order to improve their dispersibility in the ink. Examples of the surface treating agent may include an organic fatty acid such as a stearic acid, an oleic acid or a palmitic acid; or a cellulose derivative such as methylsilyl isocyanate, nitrocellulose, cellulose acetate propionate, cellulose acetate butyrate, or ethyl cellulose. The surface treating agent may be adsorbed onto the surfaces of the metal thin film flakes by using common methods.

Examples of the binding resin may include those generally used in a typical gravure ink, flexo ink, screen ink, paint or the like. Specifically, preferable examples thereof include a polymer-based resin such as an acryl resin used for paints, a vinyl chloride resin, a vinylidene chloride resin, a vinyl chloride-vinyl acetate copolymer resin, an ethylene-vinyl acetate copolymer resin, a polyolefin resin, a chlorinated olefin resin, and an ethylene-acryl copolymerization resin; a polyurethane resin used for paints, a polyamide resin, a urea resin, an epoxy resin, a polyester resin, a petroleum-based resin, a cellulose derivative resin, or the like. Furthermore, resins prepared by chemically binding polar groups such as a carbonic acid group, a phosphoric acid group, a sulfonic acid group, an amino group, and quaternary ammonium salt group to the above-mentioned resins may be used, or used in combination.

As long as the design properties and the expansibility are not reduced, the high brilliant ink used in the high brilliant ink layer may contain various types of additives used in the typical gravure ink, flexo ink, screen ink, paint, or the like. The addition of such additives aims for removal of bubbles, prevention of precipitation, dispersion of pigments, improvement of fluidity, prevention of blocking, prevention of electric charging, prevention of oxidation, photostability, absorption of ultraviolet rays, internal crosslinking, and the like. Examples of the additives may include a pigment for coloring, a dye, a wax, a plasticizer, a leveling agent, a surfactant, a dispersing agent, a defoaming agent, a chelating agent, polyisocyanate, or the like.

As the solvent used in the high brilliant ink (used for preparing the high brilliant ink layer), typical solvents used in typical gravure inks, flexo inks, screen inks, paints, or the like are available. For example, the solvent includes aromatic hydrocarbons such as toluene or xylene; aliphatic or alicyclic hydrocarbons such as n-hexane or cyclohexane; esters such as ethyl acetate or propyl acetate; alcohols such as methanol, ethanol, or isopropyl alcohol; ketones such as acetone or methyl ethyl ketone; and alkylene glycol monoalkyl ethers such as ethylene glycol monoethyl ether or propylene glycol monomethyl ether.

In general, the pigment and the other additives are formed into submicron-particles by way of milling using a roll mill, a ball mill, a beads mill, a sand mill or the like in order to achieve stable dispersion of the raw materials mixed in the ink. However, the metal flakes are mixed into the high brilliant ink used in the high brilliant ink layer of the laminated sheet for thermoforming according to the present invention (the laminated sheet having excellent sharpness of the design) in order to impart a metallic luster thereto. Therefore, the size of the metal flakes be 5 to 25 µm. If the above-described milling treatment is performed, the metal flakes will be undesirably formed into fine particles, and the metallic luster is significantly reduced. Accordingly, in the present invention, it is preferable that the above-mentioned materials be simply mixed to produce an ink instead of conducting the milling treatment. This is why the metal flakes are preferably subjected to surface treatment in advance by way of the above-mentioned procedure, thereby improving their dispersibility.

### (Lamination method)

The decoration layer 2 and the support base resin layer 5 can be laminated via an adhesive layer. The dry lamination method, the wet lamination method, or the hot melt lamination method may be applied using a general solvent-type adhesive as an adhering method to produce the laminated sheet.

When the support base resin layer 5 of the laminated sheet for thermoforming according to the present invention has a multilayered structure, deformation of the sheet, such as curling, may be prevented. The deformation makes it difficult to laminate in the lamination process, but the use of the multilayered structure reduces the occurrence of the deformation, and the lamination can be easily conducted in the present invention. Therefore, the formation of the multilayered structure is preferable.

As examples of components included in the adhesive, a thermosetting resin adhesive such as a typical phenol resin-based adhesive, a resorcinol resin-based adhesive, a phenol-resorcinol resin-based adhesive, an epoxy resin-based adhesive, a urea resin-based adhesive, a polyurethane-based adhesive, and a polyaromatic-based adhesive; a reactive type adhesive using an ethylene unsaturated carbonic acid; a thermoplastic resin-based adhesive such as a vinyl acetate resin, an acryl resin, an ethylene-vinyl acetate copolymer resin, polyvinyl alcohol, polyvinyl acetal, vinyl chloride, nylon, or a cyanoacrylate resin; a rubber-based adhesive such as a chloroprene-based adhesive, a nitrile rubber-based adhesive, a styrene-butadiene rubber-based adhesive, or a natural rubber-based adheisve; or the like. In particular, the acryl resin and the PP resin are preferable in terms of adhesiveness, and the acrylic urethane resin is preferable because flexibility or stretchability is excellent during the thermoforming such as vacuum forming.

A gravure coater, gravure reverse coater, flexo coater, blanket coater, roll coater, knife coater, air knife coater, kiss touch coater, comma coater, or the like can be used as examples of system for coating the adhesive. The adhesive can be applied on the surface of the decoration layer 2 or the support base resin layer 5.

In order to obtain sufficient adhesive strength and favorable drying properties, the amount of the adhesive applied is preferably in a range of 0.1 to 30 g/m², and more preferably 2 to 10 g/m². The thickness of the adhesive layer is preferably in a range of 0.1 to 30 µm, more preferably 1 to 20 µm, and most preferably 2 to 10 µm.

In order to improve affinity to the adhesive, the surface of the support base resin layer 5 on which the adhesive is applied is preferably subjected to surface treatment such as the plasma treatment, the corona treatment, the frame treatment, the electronic ray radiation treatment, the roughing treatment, or the ozone treatment, such that the wetting index of the surface is adjusted to 35 dyne/cm or more. Furthermore, the dry plating treatment such as vacuum deposition, sputtering, and ion plating may be performed. In addition, the wetting index is measured according to JIS K6768.

A cohesive layer can be provided instead of the adhesive layer. Preferable examples of cohesive agents used therein include an acryl resin, a rubber resin, a polyalkyl silicon resin, a urethane resin, a polyester resin, and the like.

If the laminated sheet for thermoforming according to the present invention is used as a laminated sheet for in-mold molding, the thickness of the sheet is in a range of preferably 0.1 to 1.0 mm and more preferably 0.2 to 0.5 mm.

### (Formed product and injection-molded product)

The untreated laminated sheet for thermoforming according to the present invention, or the formed product obtained by thermoforming the laminated sheet using a general method may be inserted into injection molds, and then subjected to in-mold injection-molding to obtain the injection-molded product of the present invention.

Specifically, the laminated sheet for thermoforming of the present invention may be inserted into the injection molds so that the thermoplastic resin film layer 1 faces or comes into contact with a female mold of the injection molds; or a three-dimensionally-formed product obtained by thermoforming the laminated sheet using a thermoforming method such as vacuum forming (including plug-assisted vacuum forming), vacuum & pressure forming (including the plug-assisted vacuum & pressure molding), pressure forming with a hot plate, or press forming may be inserted into the injection molds so that the thermoplastic resin film layer faces the female mold of the injection molds. Then, the laminated sheet or the formed product is clamped with the molds, and an injection resin is charged from the backside of the formed product to obtain an injection-molded product.

The forming conditions in the case of the above-mentioned vacuum forming method are not particularly limited, and typical molding conditions may be adopted. Specifically, when a far-infrared radiation heater is used, it is preferable that the temperature of the heater be set to 200 to 500°C, that the period for the indirect heating be set to 5 to 30 seconds, and that the temperature of the laminated sheet for thermoforming be adjusted to a temperature where the sheet is capable of being molded, for example, the temperature where the storage elastic modulus (E') calculated by way of the dynamic viscoelasticity measurement (hereinafter, referred to as "DMA") according to the "JIS K7244-1" method under measurement conditions of the frequency of 1 Hz and the heating rate of 3°C/min is in a range of 0.1 to 50 MPa. In addition, it is required that the temperature of the molds be determined by confirming the appearance or the shrinkage of the obtained molded product. However, it is preferable that the temperature be set to 20 to 80°C, and that the time for cooling with the molds be set to 1 to 60 sec.

The forming conditions in the case of the vacuum & pressure forming method are not particularly limited, and the typical forming conditions may be applied. Specifically, when a far-infrared heater is used, it is preferable that the temperature of the heater be set to 200 to 500°C, that the period for the indirect heating be set to 5 to 30 seconds, and that the temperature of the laminated sheet for thermoforming be adjusted to a temperature where the sheet is capable of being molded, for example, the temperature where the storage elastic modulus (E') of the DMA under above-mentioned measurement conditions is in a range of 1 to 250 MPa. In addition, the preferable temperature of the molds be identical to that of the vacuum forming method.

The forming conditions in the case of the pressure forming method with a hot plate are not particularly limited, and typical forming conditions may be adopted. Specifically, it is preferable that the temperature of the hot plate be set to a temperature where the storage elastic modulus (E') of the DMA under above-mentioned measurement conditions is in a range of 1 to 100 MPa. The time for heating with the plate varies depending on the thickness of the sheet, but it is preferable that the time be set to 1 to 20 seconds, and that the forming pressure be set to 1 to 250 Mpa.

The forming conditions in the case of the press forming method are not particularly limited, and the typical forming conditions may be applied. The press forming method refers to a mechanical forming method (i.e. the matched-mold forming method) in which a heated sheet is placed between a female mold and a male mold to produce a formed product. In this case, if the temperature of the laminated sheet for thermoforming during the forming process is set to (the glass transition temperature of the thermoplastic resin film + 20°C) or less than the calculated temperature thereof, then, a formed product having excellent sharpness of the design can be obtained. In addition, the glass transition temperature refers to a peak temperature of the loss tangent (tan δ) measured under the condition of the frequency of 1 Hz and the heating rate of 3°C/min by way of using the DMA.

To be more specific, when a far-infrared heater is used, it is preferable that the temperature of the heater be set to 200 to 500°C, that the period for the indirect heating be set to 5 to 30 seconds, and that the temperature of the laminated sheet for thermoforming be adjusted to a temperature where the sheet is capable of being molded, for example, the temperature where the storage elastic modulus (E') of the DMA under above-mentioned measurement conditions is in a range of 10 to 500 MPa. In addition, it is necessary that the temperature of the molds be determined by confirming the appearance or the shrinkage of the obtained molded product. However, it is preferable that the temperature be set to 20 to 200°C, and that the time for pressing the sheet with the female and male molds be set to 10 seconds to 5 minutes. Furthermore, the obtained molded product may be cooled in the air or using the other methods after the press forming is completed.

According to the laminated sheet for thermoforming of the present invention, the formed products that were molded at the lower temperature have the more excellent sharpness of the design. In particular, the use of the press forming method is preferable when a metallic sheen-imparted design is intended. This is because this method can achieve a formed product having a high metallic luster.

### (In-mold injection-molding)

In general, the molded product obtained by way of the above-mentioned thermoforming method is placed between the molds, such that the thermoplastic resin film layer 1 comes into contact with the female mold of the injection molds, and then, the rear portion of the formed product is filled with an injection resin to conduct integral-molding, thereby producing the injection-molded product of the present invention.

However, when the produced injection-molded product has a two-dimensional shape, or a simple three-dimensional shape in which the maximum expansion rate of the sheet is less than 120%, the laminated sheet for thermoforming of the present invention is simply inserted into the injection molds instead of using the formed product thereof, such that the thermoplastic resin film layer 1 faces or comes into contact with the female mold of the injection molds, and then, the injection resin is charged thereto in order to obtain the in-mold decoration product (in-mold injection-molded product).

It is preferable that the injection resin include a PP resin as a main component in terms of its adherence to the support base resin layer 5 or in terms of its strength. Specifically, the amount of the PP resin in the injection resin is preferably 40 % by mass or more, more preferably 50 % by mass or more, and still more preferably 60 % by mass or more.

When the injection resin includes the PP resin as a main component, various types of resins as shown in the description of the PP layer 4(A) may be used as the PP resin. In this case, the injection resin may include 40 % by mass or more of the PP resin, and may also include the other types of resins that can be melt-mixed with the PP resin. Examples of the resin that can be melt-mixed with the PP resin may include high-density polyethylenes; low-density polyethylenes; linear low density polyethylenes; styrene-based elastomers such as styrene-ethylene-butadiene-styrene copolymers and styrene-ethylene-propylene-styrene copolymers; and olefin-based elastomers such as ethylenepropylene rubber (i.e. ethylene-propylene copolymers and ethylene-propylene-diene copolymers).

Additionally, an inorganic filler may be added to the above-mentioned injection resin in order to prevent the injection-molded product from being deformed. The inorganic filler are not particularly limited, but the examples include talc, calcium carbonate, clay, diatomite, mica, magnesium silicate, silica, or the like.

In addition, as long as the low temperature impact resistance or the in-mold molding properties are not deteriorated, additives such as a coloring agent, a plasticizer, an antioxidant, an ultraviolet absorbing agent, an antistatic additive, a flame retardant, or a lubricant may be mixed into the injection resin, and the additives may be used alone or in a mixture containing two or more species.

The loading temperature of the injection resin is not particularly limited. However, since the support base resin layer 5 and the injection resin are unlikely to peel, and it is unlikely to cause bending (i.e. shrinkage) in the injection-molded product, the loading temperature of the injection resin is preferably in a range of 180 to 270°C, and more preferably 200 to 260°C when the PP resin is used. It is preferable that the temperature of the injection molds (i.e. both the female mold and male mold) be in a range of 20 to 100°C. However, when bending or the like is caused in the injection-molded product, it is required that the temperature gradient (slope) be induced in the female mold and the male mold. In addition, in order to heat the formed product inserted into the injection molds to the temperature of the mold before loading the injection resin, the injection-delay time (time from mold clamping to the injection) may be set to a range of 1 to 100 seconds.

### Examples

The present invention will be described hereinafter with reference to Examples. However, the present invention is not limited to Examples. In addition, physical properties are evaluated by using the following measurement method or test method in Examples and Comparative Examples. Furthermore, "part" and "%" are based on the mass in the Examples.

### (Ultra-low-temperature impact resistance test method)

The laminated sheet for thermoforming according to the present invention may be utilized in the form of the injection-molded product obtained by way of the in-mold injection-molding after the laminated sheet is thermoformed. Therefore, the injection-molded products obtained by way of the in-mold injection-molding were used for evaluating the low temperature impact resistance at -5°C or less since the form of such injection-molded products is close to final commercial products.

The present invention aims to improve the impact resistance at a temperature region lower than the low temperature region that is generally required for use of a molded product as a vehicle member or a construction member. Accordingly, the low temperature impact resistance at -5°C or less was termed "ultra-low-temperature impact resistance", and the impact resistance at such a temperature region was evaluated with impact strength (J). Specifically, the impact strength (J) at -30°C was measured.

A multilayered structure of the linear low density polyethylene layer 3(B) and the PP layer 4 (A) was used as the support base resin layer 5 of the laminated sheet for thermoforming of the present invention. Since the PP resin was used in the support base resin layer 5, the PP resin was used as an injection resin in order to obtain sufficient thermal adhesive, thereby producing the injection-molded product. Since the brittle temperature of the PP resin is -5°C or less, the injection-molded product thereof can exhibit excellent impact resistance at the temperature of -5°C or more. Accordingly, it was considered that the evaluation of the impact resistance at -30°C was suitable for checking the impact resistance of the laminated sheet for thermoforming of the present invention at the ultra-low-temperature.

Meanwhile, the low-temperature impact test of the present invention was conducted by using a Dupont impact tester (manufactured by UESHIMA SEISAKUSYO Co., Ltd.) based on JIS K-5400. With regard to the acceptance standard for the evaluation, when the entire body of the injection-molded product was not destroyed even if cracks or peeling are present in the thermoplastic resin film layer 1, it was considered as "accepted". In this case, 6 J or more of the Dupont impact strength was considered as a standard. In addition, the shape of the front end of the impact center was spherical, having a radius of 1/2 inches, the weight of the dropping weight was 3 kg, and the maximum dropping height was 1.6 m (the measurement limit was 48 J).

### (Example 1)

The method of producing the laminated sheet was as follows.

### (1) Thermoplastic resin film layer 1

The rubber-modified PMMA film (product name "TECHNOLLOY S001", manufactured by SUMITOMO CHEMICAL Co., Ltd.) having a haze value of 0.1% and the thickness of 125 µm was used as the transparent or semitransparent thermoplastic resin film layer 1.

### (2) Decoration protection layer

### (Hydroxyl group-containing copolymer)

A mixture solution of 850 parts of butyl acetate and 1 part of t-butyl peroxybenzoate (product name "Perbutyl Z", manufactured by NOF CORPORATION) was heated to 110°C. Then, a mixture solution of 660 parts of methyl methacrylate, 150 parts of t-butyl methacrylate, and 190 parts of 2-hydroxyethyl methacrylate; and a mixture solution of 200 parts of isobutyl acetate, 9 parts of t-butylperoxy-2-ethylhexanoate (product name "Perbutyl O", manufactured by NOF CORPORATION), and 2 parts of t-butylperoxybenzoate (product name "Perbutyl Z", manufactured by NOF CORPORATION) were added dropwise in a nitrogen atmosphere for about 5 hours while mixing. After that, the mixture was further stirred for 15 hours whereby a hydroxyl group-containing copolymer having 60% of solid content was obtained. The weight average molecular weight of the obtained resin was 100,000, the hydroxyl value of the solid content was 79 KOH mg/g, and the glass transition temperature Tg was 95°C.

In addition, the weight average molecular weight was based on a polystyrene equivalent in the GPC (gel permeation chromatography) measurement; the hydroxyl value was a value calculated as the quantity that can be neutralized with KOH based on the composition of monomers added thereto; and the polymer Tg was a value measured by using DSC (differential scanning calorimetry measurement).

### (Polyisocyanate compound)

A polyisocyanate containing an isocyanurate ring (product name "BURNOCK DN-981 ", manufactured by DAINIPPON INK AND CHEMICALS, Inc.; the number average molecular weight was about 1000; the nonvolatile content was 75%; ethyl acetate was included as a solvent; the number of functional groups was 3; and the concentration of NCO was 13 to 14%) was used as the polyisocyanate compound.

### (Solution for decoration protection layer)

The above-described copolymer containing a hydroxyl group, and the polyisocyanate compound were mixed at a ratio of 1 : 1 to prepare a solution for decoration protection layer.

### (3) Decoration layer 2

### (Aluminum thin film flakes)

Nitrocellulose (HIG7) was dissolved in a solvent mixture including 6 : 4 of ethyl acetate and isopropyl alcohol whereby a 6% solution was prepared. The solution was coated onto a polyester film by using a gravure plate having screen ruling of 175 lines/inch and the cell depth of 25 µm, and this was dried. Then, aluminum was deposited on the coated film in a vacuum at 0.04 µm thick. The above nitrocellulose solution was further applied on the deposited film under the same conditions, and this was dried. The above film was soaked in a mixture solution containing 6 : 4 of ethyl acetate and isopropyl alcohol whereby the aluminum-deposited film was separated from the polyester film. The aluminum-deposited film was pulverized into pieces having a size of about 150 µm by using a mixer whereby to prepare aluminum flakes.

### (Aluminum thin film flake slurry)

10 parts of the above aluminum flakes, 35 parts of ethyl acetate, 30 parts of methyl ethyl ketone, and 30 parts of isopropyl alcohol were mixed. Then, 5 parts of a nitrocellulose solution (25% of nitrocellulose (HIG1/4), and 75% of a mixture solution containing 6 : 4 of ethyl acetate and isopropyl alcohol) were added thereto while stirring. The mixture is stirred by using a turbo mixer while maintaining the temperature at 35°C or less until the size of the aluminum flakes became 5 to 25 µm, whereby an aluminum thin film flake slurry (10% of nonvolatile content) was prepared.

### (Brilliant ink)

30 parts of aluminum thin film flake slurry (10% of nonvolatile content) as metal flakes; 3 parts of a vinyl chloride-vinyl acetate resin containing a carboxylic acid (product name "Vinylite VMCH", manufactured by UCC Co.) as the binding resin; 8 parts of an urethane resin (product name "polyurethane 2593", manufactured by ARAKAWA CHEMICAL INDUSTRIES, Ltd., including 32% of nonvolatile content); 23 parts of ethyl acetate; 26 parts of methyl ethyl ketone; and 10 parts of isopropanol were mixed to prepare a brilliant ink that contained 35 % by mass of aluminum thin film pieces in the nonvolatile content.

### (4) Adhesive

15 parts of an aromatic polyester polyol resin (product name "LX-703VL", manufactured by DAINIPPON INK AND CHEMICALS, Inc.) as a main component; 1 part of an aliphatic polyisocyanate (product name "KR-90", manufactured by DAINIPPON INK AND CHEMICALS, Inc.) as a curing agent; and 18 parts of ethyl acetate as a diluent were mixed to prepare a polyester urethane-based adhesive.

### (5) Support base resin layer 5

### (Linear low density polyethylene layer 3)

With regard to the linear low density polyethylene layer 3(B) included in the support base resin layer 5, 100 parts of "FV403" (product name) manufactured by SUMITOMO CHEMICAL, Co., Ltd. (density was 0.919 g/cm³; and the melting temperature was 119°C); and 2 parts of a black master batch "PEONY black F31246" (product name) manufactured by DAINIPPON INK AND CHEMICALS, Inc. (low density polyethylene/carbon black = 60/40) were dry-blended by using a drum tumbler to produce a resin used for the linear low density polyethylene layer 3(B-1).

### (The resin layer constituting the support base resin layer 5)

The PP layer 4(A) constituting the support base resin layer 5was prepared as follows. 2 parts of the above-mentioned black master batch "PEONY black F31246" were dry-blended by using a drum tumbler with respect to 100 parts of mixture including: 35 parts of a low-crystalline PP resin (product name "SP7834" manufactured by SUMITOMO CHEMICAL, Co., Ltd., having a melting temperature of 127°C); 10 parts of the above-mentioned linear low density polyethylene "FV403"; 15 parts of an ethylene propylene rubber (product name "P-0480", manufactured by MITSUI CHEMICALS, Inc.); and 40 parts of a talc master batch (talc having an average particle diameter of 1.8 µm /SP 7834 = 60/40) whereby a resin used for PP layer 4(A-1). The content of the talc included in the PP layer 4(A-1) was 24 % by mass.

### (Production of a sheet for the support base resin layer 5)

The two types of the above-prepared raw material resins for the layer 4(A-1) and the layer 3(B-1) were molten at 210°C by using two extruders. Then, two layers of the layer 4(A-1) and layer 3(B-1) were laminated through the feed block, such that a layer-constitution ratio of the linear low density polyethylene layer 3(B) / the PP layer 4(A) was 30 / 70. After it was extrusion-molded through a T die to form a sheet, and the sheet was immediately cooled by using a metal roll whose temperature was adjusted to 40°C whereby the sheet for the support base resin layer 5 having thickness of 0.30 mm was obtained.

### (6) Method of laminating sheets

After the above-described solution for the decoration protection layer was applied onto the rubber-modified PMMA film by using a micro gravure coater so that the dry thickness of the film became 2.0 µm, and this was aged at 50°C for 3 days. Next, the above-prepared brilliant ink was applied onto the decoration protection layer by using a gravure coater to form the decoration layer 2 having dry thickness of 2.0 µm. Furthermore, the bonded surface of the sheet for the support base resin layer 5 (linear low density polyethylene layer 3(B-1)) was subjected to the corona treatment so that the wetting index was 40 dyne/cm, and then, the above-prepared adhesive was applied thereon by using the micro gravure coater so that the dry thickness became 5 µm, and this was dried. After drying, this was attached to the brilliant ink-coated surface of the above rubber-modified PMMA film, and this was aged at 50°C for 3 days whereby a laminated sheet for thermoforming (1) was obtained. The 20° gloss value (measurement angle of 20°) of the sheet 1 was 1050%. In connection with this, the 20° gloss value was measured by using "Micro-TRI-gloss" (manufactured by BYK Gardner, Co.) based on JIS Z8741.

### (In-mold injection-molding)

The laminated sheet for thermoforming (1) was set in the molds, such that the surface protection layer of the sheet having the ink layer came into contact with the female mold of the molds for injection-molding, and the sheet was heated at the mold temperature of 40°C, and then, a molten resin that included a PP resin (product name "TX1868H5", manufactured by NOVATEC CORPORATION) as a main raw material, and that was prepared by way of heating to 230°C was injected into the mold to conduct the integral molding. In this way, an injection-molded product (1) was produced. The thickness of the linear low density polyethylene layer 3(B-1) in the injection-molded product (1) was 0.09 mm. In addition, "AUTO SHOT 50D" manufactured by FANUC Ltd. was used as the injection-molding device. Furthermore, the 20° gloss value of the injection-molded product (1) was 1050%. The injection mold was two-dimensional-shaped (i.e. the size was 90 mm × 100 mm × 3 mm thick).

### (Results of the ultra-low-temperature impact test)

The obtained plate-shaped injection-molded product was allowed to stand in a low-temperature room at -30°C for 2 hours or more. The impact resistance was evaluated at room temperature by using a Dupont impact tester immediately after the sample was taken out. As a result, its impact strength (J) at -30°C was 24 J.

### (Example 2)

A laminated sheet for thermoforming (2) was obtained in the same way as Example 1, except that the thickness of the support base resin layer 5 was 0.15 mm. Furthermore, the sheet was subjected to in-mold injection-molding by using the same method as Example 1 to obtain an injection-molded product (2). Its impact strength at -30°C was 18 J as a result of the ultra-low-temperature impact test. The thickness of the linear low density polyethylene layer 3(B-1) of the injection-molded product (2) was 0.045 mm. Meanwhile, the 20° gloss value of the injection-molded product (2) was 1050%.

### (Example 3)

A laminated sheet for thermoforming (3) was obtained in the same manner as Example 1, except that the layer constitution ratio (B-1)/ (A-1) of the support base resin layer 5 was 15 / 85. The laminated sheet for thermoforming 3 was subjected to in-mold injection-molding by using the same method as Example 1 to obtain an injection-molded product (3). Its impact strength (J) at -30°C was 12 J as a result of the ultra-low-temperature impact test. The thickness of the linear low density polyethylene layer 3(B-1) in the injection-molded product (3) was 0.045 mm. Meanwhile, the 20° gloss value of the injection-molded product (3) was 1050%.

### (Example 4)

The layer 3(B-2) produced by using a linear low density polyethylene (product name "FV401 ", manufactured by SUMITOMO CHEMICAL, Co., Ltd.; the density was 0.902 g/cm³; and the melting temperature was 111 °C) and a compound containing 20 % by mass of the talc used in Example 1 as the linear low density polyethylene layer 3(B); and the layer 4(A-2) produced by using a propylene-ethylene random-copolymer (product name "FS3611", manufactured by SUMITOMO CHEMICAL, Co., Ltd., having a melting temperature of 132°C) as the PP layer 4(A) adjacent to the decoration layer 2 were laminated so that the layer constitution ratio (A-2)/ (B-2) was 30 / 70. Immediately after this was extrusion-molded through a T die to form a sheet, the sheet was cooled by using a metal roll whose temperature was adjusted to 40°C whereby a sheet for support base resin layer (5) having a thickness of 0.30 mm was obtained. A laminated sheet for thermoforming 4 was obtained by way of the same method as Example 1, except that the sheet was used as the support base resin layer 5. The above-mentioned sheet was subjected to in-mold injection-molding by way of the same method as Example 1 to obtain an injection-molded product (4). The ultra-low-temperature impact test revealed that its impact strength (J) at -30°C was 48 J (measurement limit) or more. The thickness of the linear low density polyethylene layer 3(B-2) in the injection-molded product (4) was 0.21 mm. In addition, the 20° gloss value of the injection-molded product (4) was 1050%.

### (Example 5)

A vacuum-formed product (5) was produced by using the laminated sheet for thermoforming (1) based on the following conditions.

### Vacuum forming conditions:

The laminated sheet for thermoforming (1) was indirectly heated at the side of the thermoplastic resin film layer 1 by using a small vacuum forming machine "FE38PH" manufactured by HARMITH, Co. After the heater was removed, the mold was lifted up against the opposite side whereby the vacuum-formed product (5). The time for heating was 15 seconds; the temperature of the sheet was 130°C; the temperature of the heater was set to 370°C; the distance between the sheet and the heater was 130 mm; the mold temperature was 60°C; and the time for vacuum cooling was 8 seconds. In addition, the average expansion rate of the bottom portion of the vacuum-formed product was 150%. The mold used for vacuum forming is in the form of 154 x 160 x 30 mm (female mold and edge portion: 15 mmR).

The bottom portion of the obtained vacuum-formed product (5) was removed, and subjected to the in-mold injection-molding by way of the same method as Example 1 whereby an injection-molded product (5). The ultra-low-temperature impact test revealed that its impact strength (J) at -30°C was 21 J. The thickness of the linear low density polyethylene layer 3(B-1) in the injection-molded product (5) was 0.06 mm. Meanwhile, the 20° gloss value of the injection-molded product (5) was 620%.

### (Example 6)

The vacuum-formed product (6) was produced by using the laminated sheet for thermoforming 4 through the same method as Example 5. The bottom portion of the molded product was removed, and an in-mold decoration product (6) was obtained through the same method as Example 1. The ultra-low-temperature impact strength (J) at -30°C was 48 J (measurement limit) or more. The thickness of the linear low density polyethylene layer 3(B-2) in the injection-molded product (6) was 0.15 mm. Meanwhile, the 20° gloss value of the injection-molded product (6) was 570%.

### (Comparative Example 1)

A laminated sheet for thermoforming 1' having no linear low density polyethylene layer 3(B) was obtained for comparison in the same manner as Example 1 except that the layer-constitution ratio (B-1)/ (A-1) of the support base resin layer 5 was 0 / 100. The comparative laminated sheet for thermoforming was subjected to the in-mold injection-molding by way of the same method as Example 1 to obtain a comparative injection-molded product (1'). The ultra-low-temperature impact test revealed that its impact strength (J) at -30°C was 3 J. Meanwhile, the 20° gloss value of the injection-molded product (1') was 1050%.

### (Comparative Example 2)

A comparative laminated sheet for thermoforming (2') was obtained in the same manner as Example 1 except that the above-mentioned propylene-ethylene random-copolymer "FS3611" (A -3) was used instead of the linear low density polyethylene layer 3(B) of the support base resin layer 5. The comparative laminated sheet for thermoforming (2') was subjected to the in-mold injection-molding by using the same method as Example 1 to obtain a comparative in-mold decoration product (2'). The ultra-low-temperature impact impact test revealed that its impact strength (J) at -30°C was 3 J. Meanwhile, the 20° gloss value of the injection-molded product (2') was 1050%.

The results of Examples 1 to 6 and Comparative Examples 1 and 2 are described in Table 1. The results shown in Table 1 revealed that the inclusion of the linear low density polyethylene layer 3(B) in the laminated sheet for thermoforming significantly improved the ultra-low-temperature impact resistance at -30°C. Additionally, it is evident that, the thicker the linear low density polyethylene layer 3(B) was, the higher the impact strength at -30°C could be obtained. With regard to the ultra-low-temperature impact strength, Examples 5 and 6 revealed that the injection-molded products using the vacuum-formed product hardly had reduction in the ultra-low-temperature impact resistance, compared with those which were thermoformed even though their thickness of the linear low density polyethylene layer 3(B) was reduced. Based on the above observation, it was confirmed that the injection-molded products using the laminated sheets for thermoforming according to the present invention in Examples 1 to 6 all had the low temperature impact strength of 6 J or more at -30°C, and it is evident that the sheets for thermoforming can have sufficient low-temperature impact resistance in terms of practical use.

**Table 1**

| | | Example 1 | Example 2 | Example 3 | Example 4 | Example 5 | Example 6 | Comparative Example 1 | Comparative Example 2 |
|---|---|---|---|---|---|---|---|---|---|
| Thermoplastic resin film layer | | Rubber-modified PMMA film (0.125 mm) | | | | | | | |
| Decoration layer | | Brilliant ink (2 µm) / decoration protection layer provided (2 µm) | | | | | | | |
| Support base resin layer | Thickness of support base resin layer [mm] | 0.30 | 0.15 | 0.30 | 0.30 | 0.30 | 0.30 | 0.30 | 0.30 |
| | Resin composition (side close to decoration layer/injected side) | B-1/A-1 | B-1/A-1 | B-1/A-1 | A-2/B-2 | B-1/A-1 | A-2/B-2 | B-1/A-1 | A-3/A-1 |
| | Layer constitution ratio (side close to decoration layer injected side) | 30/70 | 30/70 | 15/85 | 30/70 | 30/70 | 30/70 | 0/100 | 30/70 |
| Thermoforming expansion rate [%] | | - | - | - | - | 150 | 150 | - | - |
| Injection-molded producrt | Gloss value [%] | 1050 | 1050 | 1050 | 1050 | 620 | 570 | 1050 | 1050 |
| | Thickness of linear low density polyethylene layer [mm] | 0.09 | 0.045 | 0.045 | 0.21 | 0.06 | 0.15 | - | - |
| | Ultra-low-temperature impact strength [J] | 24 | 18 | 12 | 48 or more | 21 | 48 or more | 3 | 3 |

### Industrial Applicability

The laminated sheet for thermoforming according to the present invention is subjected to thermoforming and in-mold injection-molding to produce a decorated plastic molded product. The decorated plastic molded product can be used as a vehicle member, parts of home electronics, construction members, or the like. In particular, the molded product of the present invention is useful as an exterior member for vehicles or a construction member since its ultra-low-temperature impact resistance is excellent.

## Claims

1. A laminated sheet for thermoforming, comprising:
a thermoplastic resin film layer;
a decoration layer; and
a support base resin layer,
wherein the thermoplastic resin film layer, the decoration layer, and the support base resin layer are sequentially laminated, and
the support base resin layer contains one or more linear low density polyethylene layers.

2. The laminated sheet for thermoforming according to claim 1, wherein the density of a linear low density polyethylene included in the linear low density polyethylene layers is in a range of 0.900 to 0.930 g/cm².

3. The laminated sheet for thermoforming according to claim 1, wherein the thermoplastic resin film layer includes at least one resin selected from the group consisting of an acryl resin, a fluorine resin, a polyester resin, a polycarbonate resin, and a cyclic polyolefin resin.

4. The laminated sheet for thermoforming of according to claim 1, wherein the total thickness of the linear low density polyethylene layers included in the support base resin layer is 0.01 mm or more.

5. The laminated sheet for thermoforming according to claim 1, wherein the support base resin layer has a multilayered structure which includes a polypropylene layer (A) and the linear low density polyethylene layer (B).

6. The laminated sheet for thermoforming according to claim 5, wherein the multilayered structure is at least one multilayered structure selected from the group consisting of layer (A)/layer (B), layer (A)/layer (B)/layer (A), and layer (B)/layer (A)/layer (B).

7. The laminated sheet for thermoforming according to claim 5, wherein the outermost layer of the support base resin layer which is adjacent to the decoration layer is the linear low density polyethylene layer (B).

8. The laminated sheet for thermoforming according to claim 1, wherein the decoration layer is a high brilliant ink layer having a metallic luster that contains metal flakes and a binding resin.

9. A formed product that is obtained by thermoforming the laminated sheet for thermoforming according to any one of claims 1 to 8.

10. A method of producing a formed product, comprising:
thermoforming the laminated sheet for thermoforming according to any one of claims 1 to 8 by using vacuum forming, vacuum & pressure forming, pressure forming with a hot plate, or press forming.

11. An injection-molded product which is obtained by loading an injection resin onto the support base resin layer-side of the laminated sheet for thermoforming according to any one of claims 1 to 8, or onto the support base resin layer-side of a formed product produced by thermoforming the laminated sheet for thermoforming by using vacuum forming, vacuum & pressure forming, pressure forming with a hot plate, or press forming.

12. A method of producing an injection-molded product, the method comprising:
inserting the laminated sheet for thermoforming according to any one of claims 1 to 8 into injection molds, such that the thermoplastic resin film layer faces or come into contact with a female mold of the injection molds, or inserting into injection molds a formed product obtained by thermoforming the laminated sheet for thermoforming by using vacuum forming, vacuum & pressure forming, pressure forming with a hot plate, or press forming, such that the thermoplastic resin film layer comes into contact with the female mold of the injection molds;
clamping the laminated sheet or the formed product; and
loading an injection resin from the backside of the molded product.
